# EUROPÄISCHE PATENTSCHRIFT

(11) **EP 0 718 326 B1**
(45) Veröffentlichungstag und Bekanntmachung des Hinweises auf die Patenterteilung: **03.06.1998**
(21) Anmeldenummer: 95119539.5
(22) Anmeldetag: 12.12.1995
(51) Int. Cl.: C08F 220/12

(54) **Kunststoffteilchen mit erhöhter Thermostabilität**
Plastic particles with improved thermostability
Particules en matière plastique à thermostabilité améliorée

(30) Priorität: 23.12.1994 DE 4446370
(43) Veröffentlichungstag der Anmeldung: 26.06.1996
(73) Patentinhaber: Röhm GmbH, 64293 Darmstadt (DE)
(72) Erfinder: Siol, Werner, Dr., D-64297 Darmstadt (DE); Parusel, Markus, D-64409 Messel (DE)

(56) Entgegenhaltungen:
- BE-A- 628 194
- DE-A- 2 833 601

## Beschreibung

### Stand der Technik

Die Technik verwendet in zunehmendem Maße Kunststoff-Teilchen, insbesondere Polymethylmethacrylat-(PMMA)-Teilchen als strukturbildende Mittel bei der Verarbeitung von Polymeren, insbesondere Thermoplasten. Als Beispiele seien die Anwendung von PMMA-Teilchen bei der Herstellung von Displays und Folien wie z.B. von Polypropylenfolien, als Lichtstreuelemente in Formmassen u.ä. angeführt.
Besonderes Interesse besteht an formstabilen Teilchen mit einer definierten, möglichst einheitlichen Teilchengröße, insbesondere im Bereich von 2 - 12 µm Teilchendurchmesser.
Speziell mit solchen Teilchen lassen sich bei exakt einstellbarem Brechungsunterschied zu einer gegebenen Polymermatrix die unterschiedlichen Lichteffekte realisieren.
Zur Herstellung von PMMA-Kunststoff-Teilchen in dem gewünschten Größenbereich bedient sich die Technik bevorzugt der Dispersionspolymerisation von Methylmethacrylat in nicht-wäßrigen Medien. Mit dem klassischen Verfahren der Emulsionspolymerisation lassen sich im allgemeinen ohne größeren Aufwand nur Teilchen mit einem Durchmesser ≤ 2 µm herstellen.
Ein Weg um zu größeren Partikeln als mit der üblichen Emulsionspolymerisation herstellbar zu kommen, führt über einen Saatlatex, an den die Monomeren adsorbiert oder von dem sie absorbiert werden, gefolgt von der Polymerisation, speziell mit einem öllöslichen Initiator (vgl. JP-A 86/215 603, Chem. Abstr. 106, 19198z, EP-A 190 886; JP-A 75/130 892, Chem. Abstr. 84, 74863q; EP-B 91 453).
Ugelstad et al. (EP 0 003 9059) geben ein Zweistufenverfahren an, bei dem in erster Stufe eine Dispersion der Polymerteilchen in Lösungsmitteln wie 1-Chlordecan mit Hilfe von Emulgatoren hergestellt wird und in zweiter Stufe ein teilweise wasserlösliches Monomer in relativ polaren Lösungsmitteln zugegeben wird, das in die Partikel eindiffundiert. Anschließend wird auf konventionelle Weise polymerisiert. Ein Verfahren zur Herstellung von vernetzte Polyalkylmethacrylatteilchen über mehrstufige Emulsionspolymerisate wird auch in DE-A 28 33 601 angegeben. [Einen Überblick über die Dispersionspolymerisation von Methylmethacrylat in nicht wäßrigen Medien geben M.A. Winnik et al. Macromol. Chem. Macromol. Symp. 10/11, 483 - 501 (1987)].
In der (unveröffentlichten) deutschen Patentanmeldung P 43 27 464.1 wird ein Verfahren zur Herstellung monodisperser Poly(meth)acrylatteilchen nach dem Verfahren der Fällungspolymerisation angegeben, bei dem man (Meth)acrylsäureester in einem halogenfreien Lösungsmittel, das zu mindestens 70 Gew.-% aus Cyclohexan besteht in Gegenwart eines Blockcopolymeren mit Polystyrolanteilen in Anteilen von 0,1 bis 10 Gew.-% bezogen auf die Monomeren in Anwesenheit eines Perkohlensäureesters polymerisiert.

### Aufgabe und Lösung

Bei hohen Anwendungstemperaturen, wie sie bei der Modifizierung von Thermoplasten wie beispielsweise Polycarbonat, Polypropylen, Polyester, angewendet werden, zersetzen sich die Polymethacrylatteilchen der herkömmlichen Art unter Depolymerisation. Bei der thermischen Belastung von Poly(meth)acrylatteilchen, aufgebaut je zur Hälfte aus Methylmethacrylat und Isobutylmethacrylat und vernetzt mit 5 Gew.-Teilen Glykoldimethacrylat, beobachtet man bei 270 Grad C nahezu vollständige Zersetzung. An einen Einsatz in Kunststoffen mit derartig hohen oder noch höheren Verarbeitungstemperaturen wie z.B. Polycarbonat (PC) war unter diesen Umständen nicht zu denken.

Es bestand daher die Aufgabe, Kunststoff-Teilchen auf Poly(meth)acrylatbasis im Teilchendurchmesser-Bereich von 1 - 15 µm zur Verfügung zu stellen, die sich gegenüber dem Stand der Technik durch eine erhöhte Thermostabilität auszeichnen, ohne die übrigen, vorteilhaften Gebrauchseigenschaften einzubüßen. Als Maß der Teilchengröße gilt der Durchmesser, bei Abweichungen von der Kugelgestalt die jeweils größte Abmessung in Projektion. Die Teilchengrößenbestimmung kann mit dem Lichtmikroskop vorgenommen werden.

Die Anforderungen der Technik werden durch die erfindungsgemäßen Kunststoff-Teilchen auf Poly(meth)acrylatbasis mit einem Teilchendurchmesser von 1 - 15 µm in hohem Maße erfüllt. Die Erfindung beruht auf der Beobachtung, daß Kunststoff-Teilchen im gewünschten Größenbereich aufgebaut aus den Monomeren Methylmethacrylat-Acrylsäurealkylester-Vernetzer und polymerisiert in Anwensenheit kleiner Mengen eines an sich bekannten Molekulargewichtsreglers eine höhere Thermostabilität aufweisen.
Die Erfindung betrifft somit vernetzte Kunststoff-Teilchen auf Polymethyl(meth)acrylatbasis PP mit einem Teilchendurchmesser von 1 - 15 µm, aufgebaut aus den Monomeren
A) Methylmethacrylat in Anteilen von 20 bis 99,9 Gew.-%, vorzugsweise 30 bis 90 Gew.-%, besonders bevorzugt von 40 bis 70 Gew.-%,
B) Methacrylsäureester der Formel I 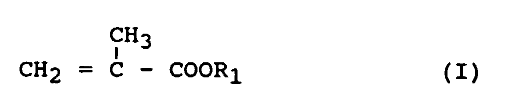 worin R₁ für einen Alkylrest mit 2 - 8 Kohlenstoffatomen, einen Cycloalkylrest mit 5 bis 6 Ringkohlenstoffatomen, der mit C₁ - C₄-Alkyl substituiert sein kann, oder einen gegebenenfalls substituierten Arylrest mit 6 bis 14 Kohlenstoffatomen, oder einen Aralkylrest, steht, in Anteilen von 0 bis 79 Gew.-%, insbesondere 20 bis 55 Gew.-%
C) Acrylsäureester der Formel II

   CH₂ = CH - COOR₂ (II)

   worin R₂ für einen Alkylrest mit 1 bis 8 Kohlenstoffatomen oder einen Cycloalkylrest mit 5 oder 6 Ringkohlenstoffatomen, der mit C₁-C₄-Alkyl substituiert sein kann oder einen gegebenenfalls substituierten Arylrest mit 6 bis 14 Kohlenstoffatomen oder einen Aralkylrest, steht, in Anteilen von 0 bis 50, vorzugsweise 1 bis 30 Gew.-%, insbesondere 2 bis 10 Gew.-%
D) mindestens einem an sich bekannten vernetzenden Monomeren CM, enthaltend wenigstens zwei radikalisch polymerisierbare Gruppen im Molekül in Anteilen von 0,1 bis 20 Gew.-%, vorzugsweise 1 bis 9 Gew.-%, unter Verwendung von an sich bekannten Molekulargewichtsreglern MR, vorzugsweise sogenannten Schwefelreglern, in Anteilen von 0,01 bis 1 Gew.-Teilen, vorzugsweise 0,05 bis 0,5 Gew.-Teilen bezogen auf die Kunststoff-Teilchen PP.

In der Regel ergänzen sich die Monomergruppen A) - D) in den Kunststoff-Teilchen PP zu 100 Gew.-%, sofern nicht noch weitere, mit den Monomeren gemäß A) - D) copolymerisierbare Monomere vorhanden sind. Hier sind z.B. Styrol oder Vinylacetat zu nennen, die in Anteilen von 0 bis 10 Gew.-% vorhanden sein können.

Vorzugsweise besitzen die infrage kommenden Acrylsäureester als Homopolymerisate eine Glasübergangstemperatur T_{λmax} im Bereich -20 bis +50 Grad C. (Zur Bestimmung von T_{λmax} siehe Vieweg-Esser, Kunststoff-Handbuch, Bd. IX, 334 - 339, Carl Hanser 1975; Ullmann's Encyclopedia of Industrial Chemistry, 5th Ed. Vol. A20, pg. 611 - 617, VCI 1992).

Neben Methylmethacrylat MMA enthalten die erfindungsgemäß aufgebauten Polymerteilchen PP vorzugsweise als Acrylsäureester der Formel II solche des Butanols, insbesondere n-Butylacrylat, desweiteren Methylacrylat, Ethylacrylat, 2-Ethylhexylacrylat. Soweit Methacrylsäureester der Formel I neben MMA zur Anwendung kommen, handelt es sich vorzugsweise um Ethylmethacrylat, (Iso)butylmethacrylat, 2-Ethylhexylmethacrylat sowie Phenylmethacrylat, Benzylmethacrylat, Phenethylmethacrylat oder Propylphenylmethacrylat.
Als vernetzende Monomere CM mit wenigstens zwei radikalisch polymerisierbaren Gruppen im Molekül (vgl. H. Rauch-Puntigam, Th. Völker, Acryl- und Methacrylverbindungen Springer-Verlag 1967) seien insbesondere solche mit zwei verschiedenen polymerisationsfähigen Einheiten im Molekül genannt, insbesondere sog. Pfropfvernetzer wie Allyl(meth)acrylat, aber auch Acryl- oder Methacrylsäureester mehrwertiger Alkohole wie Butandioldimethacrylat, Ethylenglykoldimethacrylat, Hexandioldiacrylat, Trimethyloylpropantriacrylat u.ä., in Anteilen von 1 bis 9 Gew.-% bezogen auf PP, vorzugsweise 4 ± 2 Gew.-%.
Von besonderer Bedeutung für die Lösung der vorliegenden Aufgabe ist neben der Zusammensetzung und der Vernetzung der Teilchen die Molekulargewichtsregelung durch den Regler MR. Als Regler MR kommen die an sich bekannten Molekulargewichtsregler in an sich üblichen Mengen infrage (Vgl. H. Rauch-Puntigam, Th. Völker, Acryl- und Methacrylverbindungen, Springer-Verlag 1967), insbesondere Schwefelregler wie Dodecylmercaptan, tert.-Dodecylmercaptan, n-Butylmercaptan, Thioglykolsäureester wie Butylthioglykolat, 2-Ethylhexylthioglykolat sowie mehrfunktionelle Regler wie Pentaerythrittetrathioglycolat in Mengen von 0,03 bis 2 Gew.-%, insbesondere von 0,05 bis 0,5 Gew.-% bezogen auf die Monomeren.

Im allgemeinen wird der Anteil der Molekulargewichtsregler so bemessen, daß sich bei Polymerisation in Abwesenheit von Vernetzern ein Molekulargewicht im Bereich von 10.000 - 1.000.000 Dalton ergeben würde.
Besonders hervorzuheben sind hierbei mehrfunktionelle Regler wie z.B. das oben genannte Pentaerythrittetrathioglykolat, das bevorzugt in Anteilen von 0,05 bis 1 Gew.-% in den feinteiligen Kunststoff-Teilchen enthalten ist.
Die Herstellungsmethode, d.h. das anzuwendende Polymerisationsverfahren soweit es zur Herstellung von Polymerisatteilchen in angestrebten Teilchenbereich unter Verwendung der angegebenen Monomerkomponenten plus Molekulargewichtsregler geeignet ist, erscheint nach bisher vorliegenden Ergebnissen nicht als kritisch.
Vorzugsweise kann man sich des Prinzips der in der (unveröffentlichten) deutschen Patentanmeldung P 43 27 464.1 dargestellten Methode bedienen, d.h. der Fällungspolymerisation in Cyclohexan oder der Fällungspolymerisation in Mineralöl.
Die Verfahrensprodukte weisen dann (im Gegensatz zur klassischen Perlpolymerisation) eine recht einheitliche Teilchengrößenverteilung auf. Im Zusammenhang der vorliegenden Erfindung werden sie daher als **monodispers** bezeichnet. Darunter sei zu verstehen, daß die Teilchen zu mindestens 80 Gew.-%, vorzugsweise 90 Gew.-% innerhalb eines Größenbereichs von ±20 % vom angegebenen Mittelwert liegen.

Wie bereits ausgeführt, ist die Herstellungsmethode der erfindungsgemäßen Teilchen nicht wirklich kritisch. So kann man beispielsweise die verschiedenen, oben genannten mehrstufigen Verfahren zur Herstellung von 1 - 10 µm großer Latices verwenden (siehe z.B. die Herstellung von 2 - 3 µm großen Teilchen gemäß DE-A 28 33 601). Bei all diesen mehrstufigen Verfahren ist jedoch sorgfältig darauf zu achten, daß in jeder Polymerisationsstufe Vernetzer und Regler gleichermaßen zugegen sind.
Im folgenden wird ein bewährtes Herstellungsverfahren in Form einer Fällungspolymerisation angegeben. Als Lösungsmittel/Fällungsmittel L dienen vorzugsweise halogenfreie Lösungsmittel, ausgewählt aus der Gruppe bestehend aus Mineralöl, Cyclohexan, Fettsäureestern ggfls. im Gemisch u.a. auch mit anderen Lösemitteln. Als Mineralöl seien insbesondere Gasöle mit einem Siedebereich von 225 - 350 Grad C genannt, wie z.B. das Produkt Shell Risella Gasöl G07, die beispielsweise mit Estern wie Butylacetat, meist in Mengen unter 30 Gew.-% gemischt sein können. Als Initiatoren dienen an sich übliche Initiatoren, insbesondere peroxidische Initiatoren wie z.B. Perester in den an sich üblichen Konzentrationen von 0,05 bis 2 Gew.-% bezogen auf die Monomeren. Genannt sei beispielsweise das Bis-(4-tert.Butylcyclohexyl)-peroxydicarbonat (Produkt INTEROX BCHPC der Peroxid Chemie GmbH).

Die Polymerisation kann in einem für die Fällungspolymerisation geeigneten Reaktor - bei kleineren Ansätzen beispielsweise einem 500 ml Dreihalskolben - ausgestattet mit Kühler, Schutzgaseinleitungsvorrichtung, Thermometer und Rührer durchgeführt werden. Zweckmäßig wird unter einem Schutzgas wie z.B. Argon gearbeitet.

Vorteilhafterweise gibt man in dem Reaktor das Fällungsmittel/Lösungsmittel L, das bzw. die Monomeren, und Emulgator als Lösung vor. Als Anhalt seien beispielsweise 150 Gew.-Teile Lösungsmittel L, berechnet auf die Monomeren, genannt. Anschließend erwärmt man beispielsweise auf 60 Grad C. Wenn die gewählte Innentemperatur erreicht ist, startet man unter Rühren die Polymerisation durch Zugabe des Initiators, vorzugsweise gelöst in wenig Lösungsmittel L.
Gewöhnlich steigt die Temperatur bereits nach kurzer Zeit, beispielsweise nach einer Minute, wobei sich die bis anhin klare Lösung trübt. Nach ca. 5 Minuten erscheint der Ansatz in der Regel bereits weiß. Unter den geschilderten Voraussetzungen kann nach ca. 20 Minuten mit einem Anstieg der Innentemperatur auf ca. 81 Grad C gerechnet werden, wobei die Innentemperatur infolge Siedekühlung einige Minuten bei dieser Temperatur stehen bleiben kann.
Als typische Fällungspolymerisation verläuft die Polymerisation recht schnell, so daß auf eine gute Kühlung und Rührung geachtet werden muß. Zur Nachreaktion hält man noch über eine gewisse Zeit, beispielsweise ca. 1 Stunde, unter Rühren bei ca. 80 Grad C und läßt dann unter Rühren auf Raumtemperatur abkühlen.
Die so erhaltenen Dispersionen sind nahezu völlig koagulatfrei. Man erhält monodisperse Polymerisatpartikel im angegebenen Größenbereich (Durchmesser 1 - 15 µm).

Von Interesse sind z.B. vernetzte, homogene Teilchen aus ≥ 90 Gew.-% MMA, Butylacrylat und 2,5 Gew.-% Allylmethacrylat und 0,2 % Regler in einem Teilchengrößenbereich von 2,0 - 10,0 µm oder besonders bevorzugt in einem Teilchengrößen-bereich von 3 - 8 µm.

Die erfindungsgemäß erhaltenen Kunststoff-Teilchen erfüllen die Anforderungen der Technik hinsichtlich Thermostabilität, indem sie sich auch bei relativ hohen Anwendungstemperaturen, wie sie z.B. bei der Modifizierung von Polyester, Polyamid, Polypropylen, aber auch von Polycarbonat (insbesondere Bisphenol-A-polycarbonat) vorkommen, in der gewünschten Weise anwenden lassen.

Im allgemeinen liegt der Anteil an den einzuarbeitenden Kunststoff-Teilchen bei 0,01 - 60 Gew.-%, vorzugsweise 0,5 - 25 Gew.-% bezogen auf die zu modifizierenden Formmassen.
Außer den nur mit hoher thermischer Belastung zu verarbeitenden Formmassen kommen auch sämtliche anderen in Frage.
Genannt seien insbesondere amorphe, glasklare, gegebenenfalls auch eingefärbte thermoplastische Formmassen des Typs Polymethacrylat, Polymethacrylat-Styrol-Copolymere, Polymethacrylat-Styrol-Maleinsäureanhydrid-Copolymere, Polymethacrylimide, Polystyrol, Styrolcopolymere wie SAN.

Neben dem Einsatz der erfindungsgemäßen Teilchen in Formmassen kommt auch der Einsatz der Teilchen in Gießharzen zur Anwendung. Auch die Einarbeitung der Teilchen z.B. in Anteilen von 0,01 - 30 Gew.-% in Lacke und hier insbesondere in UV-härtbare Reaktiv-Lacke ist bevorzugt.

Beim Einsatz der monodispersen Teilchen in Formmassen kommen entweder Konzentrate (Masterbatches) oder direkt Trockenmischungen zum Einsatz. Formmassen, bzw. Tockenmischungen, die diese Teilchen enthalten, können durch die bekannten thermoplastischen Verarbeitungsverfahren verarbeitet werden, so z.B. durch Extrudieren, Spritzgießen, Spritzblasen, Extrusionsblasen, Coextrudieren.
Der vorteilhafte Einsatz dieser monodispersen Perlpolymerisate dient zum einen der reinen Oberflächenveredelung von Formkörpern, insbesondere lassen sich jedoch besondere optische Effekte durch Einarbeitung dieser Teilchen in die Formmasse oder Coextrusionsmasse und Lacke erzielen.
Bevorzugt hergestellt werden mit Formmassen, die diese monodispersen Teilchen enthalten, Rückprojektionswände, TV-Screens (Diaprojektionswände, Bilderzeugung ganz allgemein), Projektionswände, Monitorabdeckungen, Skalenabdeckungen, Leuchtenabdeckungen und auch Streulinsen.
Deneben können auch Raumtrennwände mit Formmassen, die diese Perlen enthalten, hergestellt werden. Dabei stellen die genannten Anwendungen nur einen kleinen Teil der Einsatzmöglichkeiten für Formmassen mit diesen monodispersen Teilchen dar.

Die folgenden Beispiele dienen zur Erläuterung der Erfindung. Die Bestimmung der Teilchengröße geschieht mittels Lichtmikroskop.

### BEISPIELE

### Beispiel 1

In einem 1 l Reaktor mit Rührer, Kühler, Stickstoffeinleitung und Thermometer wird mit Stickstoff gespült, es werden

| | |
|---|---|
| 492,7 g | Shell Risella Gasöl G07 (Gemisch aus paraffinischen, naphthenischen und aromatischen Kohlenwasserstoffen, Siedebereich 237 - 276 Grad C, Dichte 0,857 g/cm; Viskosität 3,0 mm²/s (DIN 51562), Flammpunkt: 106 Grad C) |
| 173,0 g | Butylacetat |
| 277,5 g | Methylmethacrylat |
| 15,0 g | Butylacrylat |
| 7,5 g | Allylmethacrylat |
| 0,6 g | Dodecylmercaptan |
| 3,73g | Shellvis ® 50 (SAP150) (Styrol-Isopren-Copolymer; Erweichungstemperatur: 110 Grad C; Relative Partikeldichte (20 Grad C); 0,83 g/cm³, Schüttgewicht: 593 kg/m³ |

eingewogen und auf 70 Grad C erwärmt und solange gerührt, bis der Emulgator, das Shellvis ® 50, vollständig gelöst ist.
Durch Zugabe einer Lösung von 3 g Bis-(4-tert-Butylcyclohexyl)peroxodicarbonat, gelöst in 27 g Butylacetat, wird die Polymerisation gestartet.

Nach 5 Minuten hat sich der anfangs klare Reaktorinhalt weiß gefärbt, die Temperatur ist um 3 Grad C gestiegen.
Nach 27 Minuten hat die Innentemperatur mit 77,7 Grad C das Maximum erreicht. Man rührt noch ca. 1 Stunde bei 70 Grad C und erwärmt dann eine weitere Stunde auf 80 Grad C zur Vervollständigung der Reaktion.
Nach dem Abkühlen resultiert eine koagulatfreie Dispersion mit einem Teilchendurchmesser von 4,1 ± 0,2 µm.

Zur Aufarbeitung wird die Dispersion mit der 5-fachen Menge Cyclohexan verdünnt und über einen Seitz-Druckfilter (Seitz-Filtermatte K250) abfiltriert. Anschließend wird noch 4 mal mit Cyclohexan gewaschen und filtriert.
Anschließend wird im Vakuumtrockenschrank bei 50 Grad C getrocknet.

Die Thermoanalyse ergibt folgende Werte:
T_{v0,05} = 246 Grad C
T_{v0,1} = 252 Grad C
T_{v0,2} = 261 Grad C
T_{max 1,2} = 292 Grad C / 352 Grad C

Der T_{V0,05}-Wert gibt die Temperatur an, bei der die Abbaugeschwindigkeit der Polymeren bei einer Aufheizrate von 5 Grad C/min 0,05 % beträgt.
Entsprechend gibt der T_{V0,2}-Wert die Temperatur an, bei der die Abbaugeschwindigkeit der Polymeren bei einer Aufheizrate von 5 Grad C/min 0,2 % beträgt.
Tₘₐₓ gibt die Temperatur der maximalen Abbaugeschwindigkeit an.
Die Messung der T_{V}-Werte erfolgt in einer Thermowaage unter Inertgas.

## Patentansprüche

1. Vernetzte Kunststoff-Teilchen auf Polymethyl(meth)acrylatbasis PP mit einem Teilchendurchmesser von 1 - 15 µm, aufgebaut aus den Monomeren
A) Methylmethacrylat in Anteilen von 20 bis 99,9 Gew.-%,
B) Methacrylsäureester der Formel I 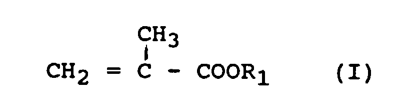 worin R₁ für einen Alkylrest mit 2 - 8 Kohlenstoffatomen, einen Cycloalkylrest mit 5 bis 6 Ringkohlenstoffatomen, der mit C₁ - C₄-Alkyl substituiert sein kann oder einen gegebenenfalls substituierten Arylrest mit 6 bis 14 Kohlenstoffatomen oder einen Aralkylrest, steht, in Anteilen von 0 bis 79 Gew.-%
C) Acrylsäureester der Formel II
CH₂ = CH - COOR₂ (II)
worin R₂ für einen Alkylrest mit 1 bis 8 Kohlenstoffatomen oder einen Cycloalkylrest mit 5 oder 6 Ringkohlenstoffatomen, der mit C₁-C₄-Alkyl substituiert sein kann oder einen gegebenenfalls substituierten Arylrest mit 6 bis 14 Kohlenstoffatomen oder einen Aralkylrest, steht, in Anteilen von 0 bis 50 Gew.-%
D) mindestens einem an sich bekannten vernetzenden Monomeren CM, enthaltend wenigstens zwei radikalisch polymerisierbare Gruppen im Molekül in Anteilen von 0,1 bis 20 Gew.-%, unter Verwendung von an sich bekannten Molekulargewichtsreglern MR, vorzugsweise sogenannten Schwefelreglern, in Anteilen von 0,01 bis 1 Gew.-Teilen bezogen auf die Kunststoff-Teilchen PP.

2. Vernetzte Kunststoff-Teilchen gemäß Anspruch 1, dadurch gekennzeichnet, daß die Methacrylsäureester der Formel I in Anteilen von 20 - 55 Gew.-% vorhanden sind.

3. Vernetzte Kunststoff-Teilchen gemäß Anspruch 1, dadurch gekennzeichnet, daß die Acrylsäureester der Formel II in Anteilen von 1- 30 Gew.-% vorhanden sind.

4. Vernetzte Kunststoff-Teilchen gemäß Anspruch 1, dadurch gekennzeichnet, daß die vernetzenden Monomeren CM in Anteilen von 1 - 9 Gew.-% vorhanden sind.

5. Vernetzte Kunststoff-Teilchen gemäß den Ansprüchen 1 - 4, dadurch gekennzeichnet, daß sie ein durch Einsatz von Molekulargewichtsreglern geregeltes Molekulargewicht M_{w} besitzen, das bei Polymerisation in Abwesenheit von Vernetzern im Bereich von 10.000 bis 1.000.000 Dalton liegen würde.

6. Vernetzte Kunststoffteilchen gemäß den Ansprüchen 1 bis 5, dadurch gekennzeichnet, daß die Teilchen zu mindestens 80 Gew.-% innerhalb eine Größenbereichs von 2 µm bis 10 µm liegen.

7. Verwendung der vernetzten Kunststoff-Teilchen gemäß Anspruch 1 zur Einarbeitung in Formmassen.

8. Verwendung der vernetzten Kunststoff-Teilchen gemäß Anspruch 1, zur Einarbeitung in Gießharze.

9. Verwendung der vernetzten Kunststoffteilchen gemäß Anspruch 1 zur Einarbeitung in Lacke.

## Claims

1. Crosslinked plastic particles based on polymethyl(meth)acrylate PP with a particle diameter of 1 - 15 µm, comprised of monomers
A) methyl methacrylate in proportions of 20 to 99.9 percent by weight,
B) methacrylates of formula I 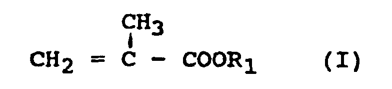 wherein R₁ denotes an alkyl group with 2 - 8 carbon atoms, a cycloalkyl group with 5 to 6 ring carbon atoms which may be substituted by C₁ - C₄ alkyl, or an optionally substituted aryl group with 6 to 14 carbon atoms, or an aralkyl group, in proportions of 0 to 79 percent by weight
C) acrylates of formula II
CH₂ = CH - COOR₂ (II)
wherein R₂ denotes an alkyl group with 1 to 8 carbon atoms, or a cycloalkyl group with 5 or 6 ring carbon atoms which may be substituted by C₁ - C₄ alkyl, or an optionally substituted aryl group with 6 to 14 carbon atoms, or an aralkyl group, in proportions of 0 to 50 percent by weight
D) at least one crosslinking monomer CM, which is known *per se*, containing at least two radically polymerisable groups per molecule, in proportions of 0.1 to 20 percent by weight, using molecular weight regulators MR, which are known *per se*, preferably so-called sulphur regulators, in proportions of 0.01 to 1 percent by weight in relation to the plastic particles PP.

2. Crosslinked plastic particles according to claim 1, characterised in that the methacrylate of formula I is present in proportions of 20 - 55 percent by weight.

3. Crosslinked plastic particles according to claim 1, characterised in that the acrylates of formula II are present in proportions of 1 - 30 percent by weight.

4. Crosslinked plastic particles according to claim 1, characterised in that the crosslinking monomers CM are present in proportions of 1 - 9 percent by weight.

5. Crosslinked plastic particles according to claims 1 to 4, characterised in that due to the use of molecular weight regulators, they have a regulated molecular weight M_{w} which, on polymerisation with no crosslinkers being present, would lie in the region of 10,000 to 1,000,000 Daltons.

6. Crosslinked plastic particles according to claims 1 to 5, characterised in that at least 80 percent by weight of the particles lie within a size range of 2 µm to 10 µm.

7. Use of crosslinked plastic particles according to claim 1 for working into moulding materials.

8. Use of crosslinked plastic particles according to claim 1 for working into casting resins.

9. Use of crosslinked plastic particles according to claim 1 for working into lacquers.

## Revendications

1. Particules de matière plastique réutilisées à base de poly[(méth)acrylate de méthyle] PP ayant un diamètre de particules de 1-15 µm, constituées de monomères
A) méthacrylate de méthyle en des teneurs de 20 à 99,9 % en poids,
B) esters d'acide méthacrylique de formule I 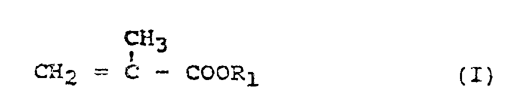 où R₁ est un radical alkyle de 2-8 atomes de carbone, un radical cycloalkyle de 5 à 6 atomes de carbone dans le cycle, qui peut être substitué par un alkyle C₁-C₄, ou un radical aryle substitué le cas échéant avec 6 à 14 atomes de carbone, ou un radical aralkyle, en des teneurs de 0 à 79 % en poids,
C) esters d'acide acrylique de formule II
CH₂ = CH - COOR₂ (II)
où R₂ est un radical alkyle de 1 à 8 atomes de carbone ou un radical cycloalkyle de 5 ou 6 atomes de carbone dans le cycle, qui peut être substitué par un alkyle C₁-C₄ ou un radical aryle substitué le cas échéant par 6 à 14 atomes de carbone, ou un radical aralkyle, en des teneurs de 0 à 50 % en poids,
D) au moins l'un des monomères CM réticulants connus, contenant au moins deux groupes polymérisables dans la molécule par voie radicalaire, en des teneurs de 0,1 à 20 % en poids,
en utilisant des régulateurs MR de poids moléculaire connus, de préférence ce qu'on appelle des régulateurs au soufre, en des teneurs de 0,01 à 1 partie en poids par rapport aux particules de matière plastique PP.

2. Particules de matière plastique réticulées selon la revendication 1,
caractérisées en ce que
les esters d'acide méthacrylique de formule I sont présents en des teneurs de 20-55 % en poids.

3. Particules de matière plastique réticulées selon la revendication 1,
caractérisées en ce que
les esters d'acide acrylique de formule II sont présents en des teneurs de 1-30 % en poids.

4. Particules de matière plastique réticulées selon la revendication 1,
caractérisées en ce que
les monomères réticulants CM sont présents en des teneurs de 1-9 % en poids.

5. Particules de matière plastique réticulées selon les revendications 1-4,
caractérisées en ce qu'
elles possèdent un poids moléculaire M_{W} régulé par l'utilisation de régulateurs de poids moléculaire qui, pour une polymérisation en absence d'agents réticulants serait compris entre 10 000 et 1 000 000 dalton.

6. Particules de matière plastique réticulées selon les revendications 1 à 5,
caractérisées en ce qu'
au moins 80 % en poids des particules se trouvent dans un intervalle de taille de 2 µm à 10 µm.

7. Utilisation des particules de matière plastique réticulées selon la revendication 1 pour l'incorporation dans des masses à mouler.

8. Utilisation des particules de matière plastique réticuées selon la revendication 1,
pour l'incorporation dans des résines à couler.

9. Utilisation des particules de matière plastique réticulées selon la revendication 1
pour l'incorporation dans des vernis.
